# EUROPEAN PATENT SPECIFICATION

(11) **EP 4 253 169 B1**
(45) Date of publication and mention of the grant of the patent: **07.05.2025**
(21) Application number: 23186044.6
(22) Date of filing: 18.03.2020
(51) Int. Cl.: B60S 3/04, B60S 3/00

(54) **AUTOMATED WASHING UNIT FOR A HEAVY-DUTY VEHICLE**
AUTOMATISCHE WASCHEINHEIT EINES NUTZFAHRZEUGS
UNITÉ DE LAVAGE AUTOMATIQUE D'UN VÉHICULE UTILITAIRE

(30) Priority: 20.03.2019 ES 201900042
(43) Date of publication of application: 04.10.2023
(62) Divisional of application: 20725208.1
(73) Proprietor: Chirila, Mircea, 19208 Alovera (ES)
(72) Inventor: Chirila, Mircea, 19208 Alovera (ES)
(74) Representative: Igartua, Ismael

(56) References cited:
- EP-A1- 2 712 776
- WO-A1-2011/135139
- US-A1- 2010 186 782

## Description

### TECHNICAL FIELD

The present invention relates to heavy-duty vehicle automated washing equipment.

### PRIOR ART

Vehicle automated washing equipment is designed to operate and provide service in certain locations by installing the equipment, which are provided between other elements, washing boxes, rotating rollers moved by rails and afferent washing systems with soap and water, and drying systems, which wash the vehicles in that precise location.

Among such equipment are conventional truck washers, equipped with machinery in the form of gantries provided with rollers with, acting automatically using abundant soap and water, and commonly assisted by the physical work of hired personnel who perform complementary tasks of rinsing, scrubbing, and/or clarifying using auxiliary devices.

Other devices are the wide range of spraying systems, such as, for example, fixed, rotating, or oscillating spraying systems, which operate at different pressures affecting the fluid jet and the area of action.

Other devices are those carrying out the function of steam cleaning, which are used in domestic and industrial cleaning and are commonly referred to as "steamer".

EP2712776A1 shows an automated washing unit of a heavy-duty vehicle having a body with side, upper, lower, front, and rear areas, and wheels, the washing unit comprising two mobile sub-units which are coupled to one another forming a gantry-shaped tandem for being moved synchronously along the heavy-duty vehicle, and wherein each mobile sub-unit has a washing module with cleaning agent discharge means for discharging cleaning agents on the body of the heavy-duty vehicle, with the washing modules facing and separated from one another by a distance substantially similar to the width of the body of the heavy-duty vehicle. Document US 2010/186 782 A1 discloses a washing module for an automated washing unit according to the state of the art.

### DISCLOSURE OF THE INVENTION

The object of the invention is to provide a washing module for an automated washing unit of a heavy-duty vehicle, as defined in the claims.

The invention relates to a washing module for an automated washing unit of a heavy-duty vehicle comprising a casing with an opening oriented towards the heavy-duty vehicle, wherein inside the casing there are arranged cleaning agent discharge means for discharging cleaning agents on the heavy-duty vehicle through the opening and wherein inside the casing there are also arranged extraction means for extracting the cleaning agents discharged on the heavy-duty vehicle.

Therefore, the washing module has the opening of the casing through which the cleaning agents are discharged in a proximal position and oriented towards the heavy-duty vehicle, such that a concentrated action of the cleaning agents on the heavy-duty vehicle is obtained, whereas the extraction means allow the cleaning agents that have been discharged on the heavy-duty vehicle to be collected, where said used cleaning agents can be sent to an area for the filtration and treatment so they can be recirculated and used again in washing the heavy-duty vehicle, or so they can be reused in another function, whereby obtaining a washing unit which allows for a more efficient management of resources used for washing the heavy-duty vehicle. Document EP2712776A1 presents washing modules with cleaning agent discharge means in the form of sprayers acting in a scattered manner on the heavy-duty vehicle, and furthermore the cleaning agents fall directly to the ground after use, without there being any extraction means in the washing modules for collecting them.

These and other advantages and features of the invention will become apparent in view of the figures and the detailed description of the invention.

### DESCRIPTION OF THE DRAWINGS

Figure 1 shows a schematic front view of a first embodiment of the washing unit having vertical washing modules for acting on the side areas of the heavy-duty vehicle, horizontal washing modules for acting on the wheels, fixed washing modules for acting on the lower area, and transverse washing modules for acting selectively on the front, upper, and rear areas.
Figure 2 shows a schematic side view of the washing unit of Figure 1.
Figure 3 shows a schematic front view of a second embodiment of the washing unit, which is identical to the first embodiment of Figure 1, except that the vertical washing modules act on the upper area of the heavy-duty vehicle, in addition to acting on the side areas.
Figure 4 shows a schematic side view of the washing unit of Figure 3.
Figure 5 shows a schematic front view of a third embodiment of the washing unit, which is identical to the second embodiment of Figure 3, except that it does not have the transverse washing modules for acting selectively on the front, upper, and rear areas.
Figure 6 shows a schematic side view of the washing unit of Figure 5.
Figure 7 shows a schematic front view of a fourth embodiment of the washing unit having vertical washing modules adapted for acting on the side, front, upper, and rear areas and wheels of the heavy-duty vehicle, and fixed washing modules for acting on the lower area.
Figure 8 shows a schematic side view of the washing unit of Figure 7.
Figures 9 and 10 show a first example of one of the modules of the washing unit.
Figures 11 and 12 show a second example of one of the modules of the washing unit with the possibility of being extended.
Figure 13 shows a schematic front view of a fifth embodiment of the washing unit.

### DETAILED DISCLOSURE OF THE INVENTION

The invention relates to a washing module for an automated washing unit 1 of a heavy-duty vehicle having a body 4 with two side areas, an upper area, a lower area, a front area, and a rear area, and wheels 5. The heavy-duty vehicle can be a truck with a trailer, a trailer, a road train, a bus, or another similar road transport heavy-duty vehicle.

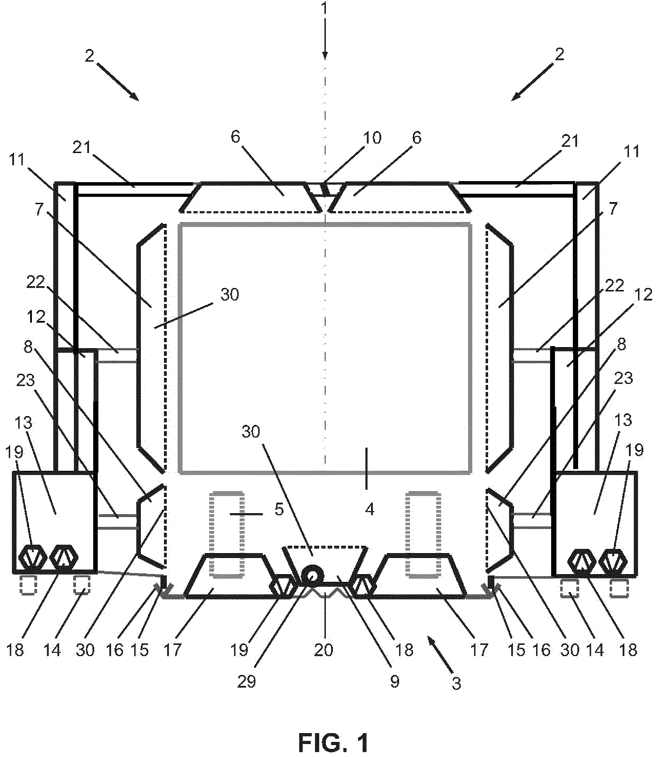

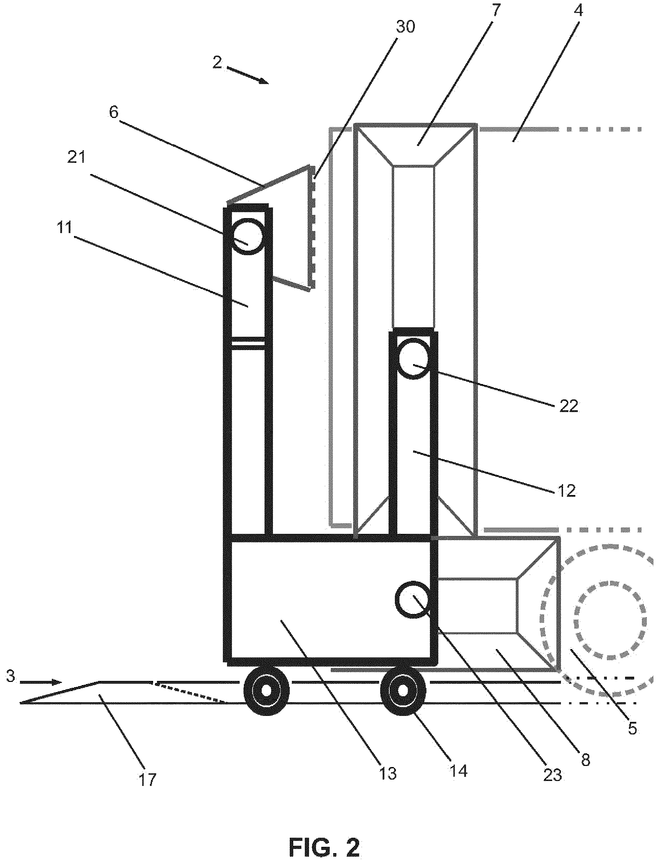

Figures 1 and 2 show a first embodiment of the washing unit 1 comprising two mobile sub-units 2 which are coupled to one another forming a gantry-shaped tandem for being moved synchronously along the heavy-duty vehicle. Each mobile sub-unit 2 has a vertical washing module 7 for discharging cleaning agents on one of the side areas of the body 4 of the heavy-duty vehicle, with the vertical washing modules 7 facing and separated from one another by a distance substantially similar to the width of the body 4 of the heavy-duty vehicle. The two mobile sub-units 2 are moved parallel to the side areas of the body 4 of the heavy-duty vehicle.

Each mobile sub-unit 2 comprises a main body 13 having a support arm 22 attached by its free end to one of the vertical washing modules 7, the washing module 7 comprising a casing 30 with an opening oriented towards the heavy-duty vehicle, and being arranged inside the casing 30 cleaning agent discharge means 26, 27 for discharging cleaning agents on the heavy-duty vehicle through the opening and extraction means 24, 28 for extracting the cleaning agents discharged on the heavy-duty vehicle. The vertical washing modules 7 are thereby close to the side areas of the heavy-duty vehicle, and as the mobile sub-units 2 move forward, the cleaning agent discharge means 26, 27 wash the side areas of the heavy-duty vehicle, whereas the extraction means 24, 28 gradually extract the cleaning agents used during washing.

The vertical washing module 7 has an elongated (for example, rectangular) configuration with a vertical arrangement, wherein the largest dimension of the module 7 coincides with the height of the body 4 of the heavy-duty vehicle. Therefore, by means of the movement of the two mobile sub-units 2, from the back part to the front part of the heavy-duty vehicle, the entire side area of the body 4 of the heavy-duty vehicle is washed.

Additionally, the main body 13 of each mobile sub-unit 2 has another support arm 23 which is attached by its free end to a horizontal washing module 8 which, like the module 7, also comprises a casing 30 with an opening oriented towards the heavy-duty vehicle, and being arranged inside the casing 30 cleaning agent discharge means 26, 27 for discharging cleaning agents on the wheels 5 of the heavy-duty vehicle through the opening and extraction means 24, 28 for extracting the cleaning agents discharged on the heavy-duty vehicle.

The horizontal washing module 8 has an elongated (for example, rectangular) configuration with a horizontal arrangement, wherein the largest dimension of the module 8 coincides with the width of one or more wheels 5 of the heavy-duty vehicle. Therefore, by means of the movement of the two mobile sub-units 2, from the back part to the front part of the heavy-duty vehicle, all the wheels 5 of the heavy-duty vehicle are washed. Alternatively, the largest dimension of the vertical washing module 7 coincides with the height of the body 4 plus the height of one of the wheels 5, such that module 8 is not necessary for washing the wheels 5.

The support arm 22 of the vertical washing module 7 is extendable for moving the washing module 7 closer to or farther away from the side area of the body 4 of the heavy-duty vehicle. Additionally, the support arm 23 of the horizontal washing module 8 is also extendable for moving the washing module 8 closer to or farther away from the wheel 5 of the heavy-duty vehicle. Both support arms 22, 23 extend from the main body 13 perpendicular to the direction of movement of the mobile sub-units 2. The support arms 22, 23 thereby allow the modules 7, 8 to be moved closer to the side areas of the body 4 of the heavy-duty vehicle adjusting to its width. The support arms 22, 23 allow adjusting the modules 7, 8 until their openings contact the heavy-duty vehicle, whereby concentrating the action of the cleaning agents on the area of the vehicle in which the modules are positioned, and furthermore favoring the extraction of the cleaning agents, minimizing such agents being able to be poured onto the ground.

The support arm 22 of the vertical washing module 7 is attached by its end opposite the free end to a vertical tower 12 of the main body 13. The tower 12 is part of the main body 13, so the tower 12 can be an element integrally attached to the body 13 or be an extension of the body 13 itself. The module 7 is therefore in the vertical arrangement with respect to the side area of the body 4, and by means of the movement of the mobile sub-units 2, from the back part to the front part of the heavy-duty vehicle, the entire side area of the body 4 of the heavy-duty vehicle is washed.

Alternatively, the vertical tower 12 is extendable in the vertical direction with respect to the main body 13, such that the vertical washing module 7 is mobile in the vertical direction together with the tower 12. Additionally, the support arm 22 of the vertical washing module 7 is rotatable about its longitudinal axis for rotating the washing module 7 over the side area of the body 4 of the heavy-duty vehicle, with the arm 22 being rotatable by an angle of at least 90°. The module 7 is therefore vertically mobile and rotatable with respect to the side area, whereby the support arm 22 can be rotated to situate the module 7 in the horizontal arrangement, and move the support arm 22 vertically, thereby modifying the direction in which the means 26, 27 act to perform cleaning with upward and downward vertical movements. The vertical movement of the module 7 in the horizontal arrangement may be combined with the movement of the mobile sub-units 2 for washing the entire side area.

Additionally, the vertical washing module 7 is inclinable with respect to the side area of the body 4. The inclination is obtained with an articulation (not depicted), the articulation is arranged between the module 7 and the support arm 22, or is arranged between the support arm 22 and the main body 13. The module 7 can therefore be adapted to inclined surfaces, such as the cab of the heavy-duty vehicle for example.

The washing unit 1 additionally comprises a tread way 3 for arranging the heavy-duty vehicle and has fixed washing modules 9, and like the vertical washing modules 7 and horizontal washing modules 8, each of the modules 9 comprises a casing 30 with an opening oriented towards the heavy-duty vehicle, being arranged inside the casing 30 cleaning agent discharge means 26, 27 for discharging cleaning agents on the lower area of the body 4 of the heavy-duty vehicle through the opening and extraction means 24, 28 for extracting the cleaning agents discharged on the heavy-duty.

The tread way 3 is impermeable, having a certain liquid tightness capacity, to prevent pouring onto the ground/into the environment.

The tread way 3 comprises a cleaning agent and power supply inlet 18, and an evacuation outlet 19 for evacuating the cleaning agents towards an area for the filtration, treatment, and recirculation of the cleaning agents towards the inlet 18. The inlet 18 is connected with the cleaning agent discharge means 26, 27 and the outlet 19 is connected with the extraction means 24, 28. Therefore, the cleaning agents that have been used in washing the heavy-duty vehicle can be used again after having been filtered and treated.

The fixed washing modules 9 are arranged on a collector 20 channeling the cleaning agents discharged on the heavy-duty vehicle towards the outlet 19.

The tread way 3 comprises a set of tread plates 17 that can be coupled to one another to form tracks for arranging the heavy-duty vehicle. The tread plates 17 forming the ends of the tracks have a slope for defining an inlet ramp and an outlet ramp in each track.

The tread plates 17 are attached to each side of the collector 20 to form an assembly of a width similar to the width of a heavy-duty vehicle, for example, the maximum regulatory width for the ordinary road transport is of 2.55 meters. The length of the set of the tread plates 17 and the collector is similar to the length of a heavy-duty vehicle, estimated to be about 20 meters.

The tread plates 17 and the collector 20 are coupled together in a leak-tight manner for ensuring impermeability.

The tread plates 17 can be disassembled from one another and can also be disassembled with respect to the central collector 20 to facilitate stacking and transport. Furthermore, the collector 20 is a flexible structure that can be folded to thus reduce the size of the tread way 3 and facilitate transport.

The washing unit 1 additionally comprises pumping devices 29 which are arranged in the fixed washing modules 9 and/or in the collector 20. These devices 29 circulate the cleaning agents towards the outlet 19, preventing particles of said agents from settling at the bottom of the module 9 or the collector 20.

The tread way 3 comprises guide rails 16 acting with guides 15 of the main bodies 13 for guiding the two mobile sub-units 2. The guide rails 16 are attached to the tread plates 17.

The main body 13 of each mobile sub-unit 2 has wheels 14 to facilitate movement. The wheels 14 are motor-powered, and the guide rails 16 are a channel through which the guide 15 in the form of a wheel moves. Alternatively, the wheels 14 of the main body are freely rotating (not motor-powered) wheels, and the guide rails 16 are drive chains driven by a motor and the guides 15 are toothed wheels meshing with the chains.

The main body 13 of each mobile sub-unit 2 has an extendable tower 11 that can be extended in the vertical direction and at least one transverse washing module 6 which, like the vertical modules 7, horizontal modules 8, and fixed modules 9, also comprises a casing 30 with an opening oriented towards the heavy-duty vehicle, being arranged inside the casing 30 cleaning agent discharge means 26, 27 and extraction means 24, 28 of the cleaning agents discharged on the heavy-duty vehicle. Between the extendable towers 11 there is arranged a support arm 21 in which the transverse washing module 6 is rotatably assembled, such that the transverse washing module 6 can be oriented for discharging cleaning agents on the front, upper, and rear areas of the body 4 of the heavy-duty vehicle.

As shown in Figure 1, the washing unit 1 preferably has two transverse washing modules 6 which are attached to one another by coupling means 10, said means 10 serving to attach the two mobile sub-units 2 to one another and form the gantry-shaped tandem. Alternatively the support arm 21 can be extended between the extendable towers 11 attaching the two mobile sub-units 2. The joint movement of the two mobile sub-units 2 is additionally assured by the guiding coupling of the main bodies 13 with the tread way 3 through the guide rails 16 and the guides 15.

The support arm 21 is rotatable by an angle of at least 180°, such that the joint action of the rotation of the arm 21, the movement in the vertical direction of the extendable towers 11, and the movement of the mobile sub-units 2, allows the transverse washing modules 6 to be oriented so as to act alternatively on the front, upper, and rear areas of the body 4 of the heavy-duty vehicle. In Figure 1 the transverse washing modules 6 are illustrated acting on the upper area of the body 4, and in Figure 2 they are illustrated acting on the rear area of the body 4.

Additionally, the extendable tower 11 is laterally movable on the main carriage 13. The tower 11 is movable with respect to the tower 12 in a direction parallel to the side areas of the body 4 of the heavy-duty vehicle, and in the same direction of movement of the mobile sub-units 2. This lateral movement of the tower 11 allows the transverse washing modules 6 to be moved closer to or farther away from the front, or rear, surface of the body 4, without having to move the mobile sub-units 2. Moreover, when the modules 6 act on the upper area, slight movement of the modules 6 in the longitudinal direction of the body 4 is also allowed.

The extendable tower 11 and the tower 12 are arranged on the main carriage 13 in different planes, such that the tower 11 is laterally movable on the main carriage 13 without colliding with the tower 12. As can be observed in Figure 1, the tower 11 is arranged in an outer plane with respect to the tower 12.

The main body 13 of each mobile sub-unit 2 has a cleaning agent and power supply inlet 18 which is connected with the cleaning agent discharge means 26, 27 of the washing module 6, 7, 8, and an outlet 19 which is connected with the extraction means 24, 28 of the washing module 6, 7, 8 for sending the cleaning agents towards an area for the filtration, treatment, and recirculation of the cleaning agents towards the inlet 18 of the main body 13.

Alternatively or additionally, the main body 13 of each mobile sub-unit 2 has auxiliary cleaning agent supply and power supply means which are connected with the cleaning agent discharge means 26, 27 of the washing module 6, 7, 8, and filtration, treatment, and recirculation means which are connected with the extraction means 24, 28 of the washing module 6, 7, 8 for filtering, treating, and recirculating the cleaning agents towards the auxiliary cleaning agent supply means of the main body 13. The main body 13 can thereby work autonomously without having to be connected with a cleaning agent and power supply.

The coordinated action of the vertical modules 7, horizontal modules 8, transverse modules 6, and fixed modules 9 allows virtually the entire surface of the heavy-duty vehicle to be covered, such that complete washing of the vehicle is achieved with an efficient management of the cleaning agents.

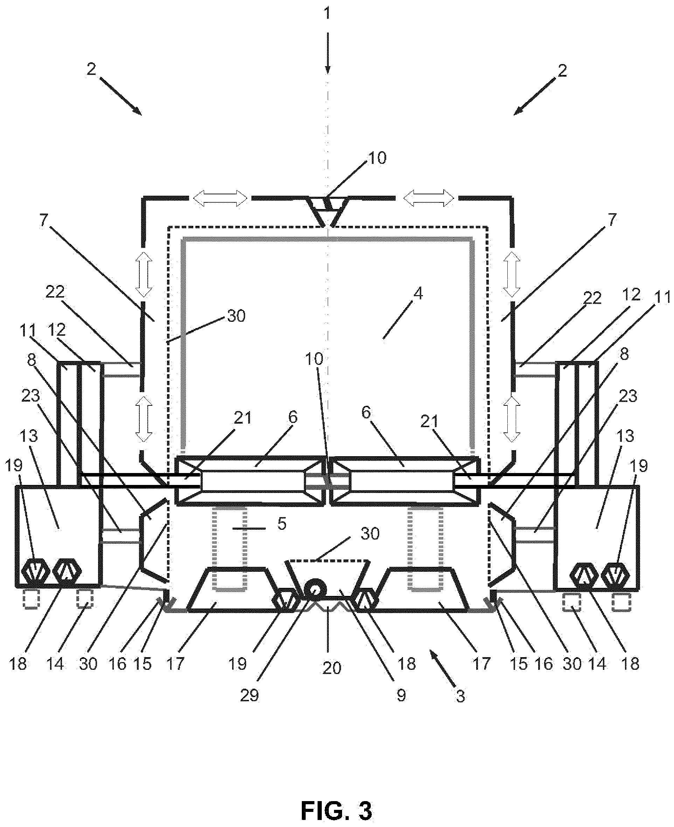

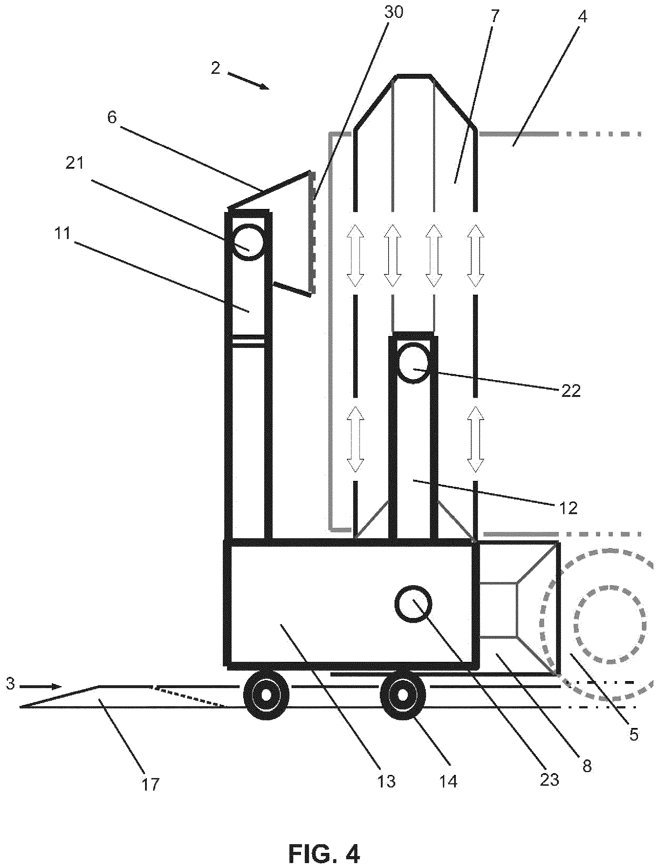

Figures 3 and 4 show a second embodiment of the washing unit, which is identical to the first embodiment described in the preceding paragraphs, and differs only in the vertical washing modules 7, therefore the above description for the first example of Figures 1 and 2 is applicable to the second example of Figures 3 and 4.

Unlike Figures 1 and 2, the vertical washing module 7 of Figures 3 and 4 is L-shaped for discharging cleaning agents on the upper area and one of the side areas of the body 4 of the heavy-duty vehicle, with the vertical washing modules 7 of the mobile sub-units 2 being attached to one another to form the gantry-shaped tandem. In this case, washing the upper area of the body 4 is performed with the transverse modules 6 and the upper part of the vertical washing modules 7.

The upper part of the vertical washing modules 7 of each mobile sub-unit 2 are attached by coupling means 10, such that the attachment of the vertical washing modules forms another gantry complementing the rigidity of the gantry-shaped tandem which is obtained by the coupling means 10 attaching the transverse washing modules 6.

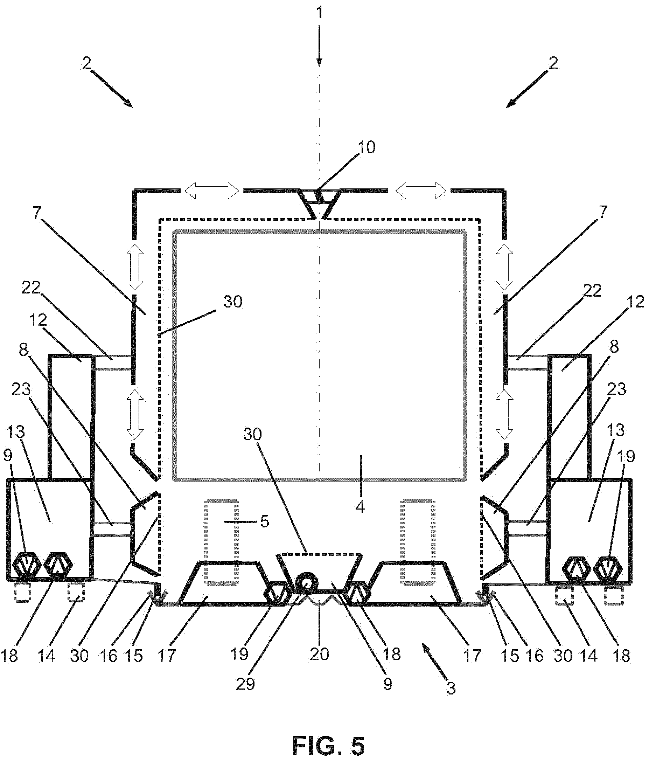

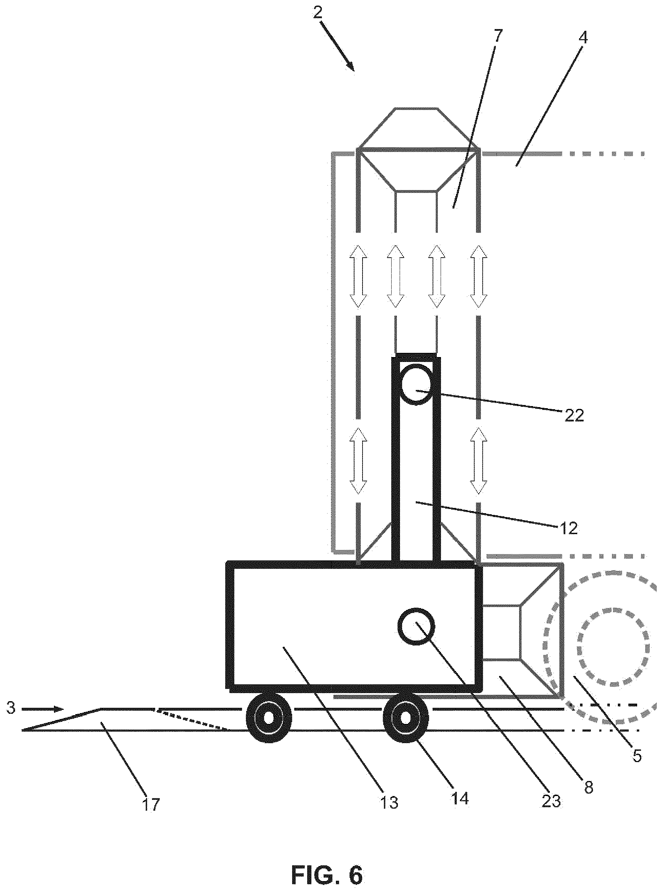

Figures 5 and 6 show a third embodiment of the washing unit, which is identical to the second embodiment described in the preceding paragraphs, and differs only in that it does not have the extendable towers 11 between which the support arm 21 of the washing modules transversal 6 is arranged, such that on the upper area of the body 4 only the upper part of the vertical washing modules 7 acts. The entire above description for the first and second examples of Figures 1, 2, 3 and 4 is applicable to the third example of Figures 5 and 6.

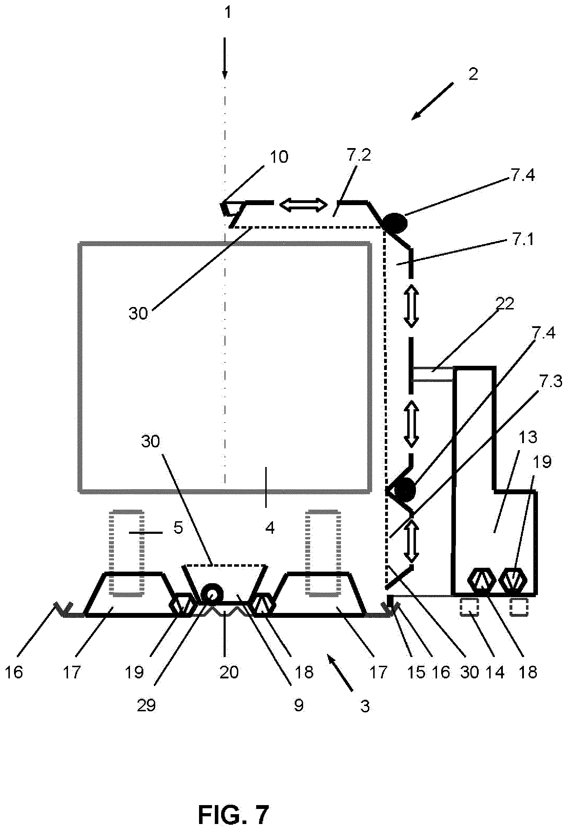

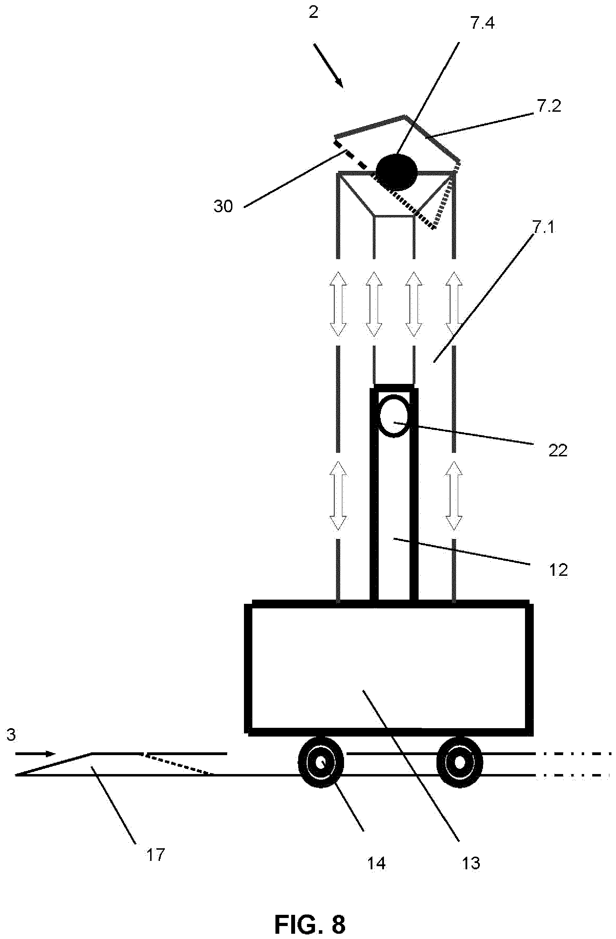

Figures 7 and 8 show a fourth embodiment of the washing unit 1 which is identical to the examples described in the preceding paragraphs in reference to the tread way 3 with the fixed modules, and to the main bodies 13 of the mobile sub-units 2. This fourth embodiment differs from the preceding embodiments in that there are no horizontal washing modules 8 and transverse washing modules 6, and instead there are vertical washing modules 7 acting on the side, upper, front, and rear areas, and wheels of the heavy-duty vehicle. Therefore, the entire above description for the examples of Figures 1, 2, 3, 4, 5, and 6 is applicable to the fourth example of Figures 7 and 8 insofar as they are related.

The automated washing unit 1 of the heavy-duty vehicle of this fourth embodiment comprises two mobile sub-units 2 which are coupled to one another forming the gantry-shaped tandem for being moved synchronously along the heavy-duty vehicle. Each mobile sub-unit 2 comprises the main body 13 having the support arm 22 attached by its free end to one of the vertical washing modules 7, the washing module 7 comprising the casing 30 with the cleaning agent discharge means 26, 27 and the extraction means 24, 28.

The vertical washing module 7 of each mobile sub-unit 2 comprises a central part 7.1 and at least one end part 7.2, 7.3 which is articulated with respect to an end of the central part 7.1, and wherein the central part 7.1 is attached to the main body 13 of the mobile sub-unit 2 by means of the support arm 22, and wherein each of the parts 7.1, 7.2, 7.3 of module 7 comprises a respective casing 30, the cleaning agent discharge means 26, 27 and the extraction means 24, 28 being arranged inside the casing 30.

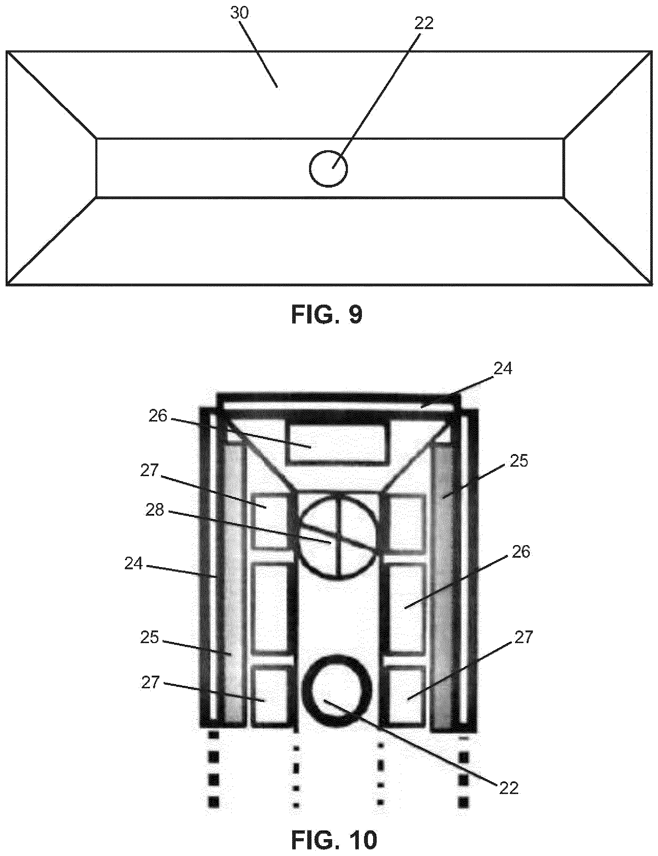

As shown in Figure 9, the vertical washing module 7 comprises a central part 7.1, an upper end part 7.2, and a lower end part 7.3, wherein the central part 7.1 is articulated by its ends with the end parts 7.2, 7.3 by means of a respective articulation 7.4. The central part 7.1 is configured for discharging cleaning agents on one of the side areas of the body 4, the upper end part 7.2 on the upper area, and the lower end part 7.3 on the wheels 5.

The articulations 7.4 are configured for rotating the end parts 7.2, 7.3 with respect to the central part 7.1, and are additionally configured for rotating the end parts 7.2, 7.3 about their longitudinal axis. The articulations 7.4 are configured for allowing the rotation of the parts 7.1, 7.2, 7.3 with respect to one another according to an angle of at least 180°, and are additionally configured for allowing the rotation of the end parts also by an angle of rotation of at least 180°.

Figure 8 depicts the upper end part 7.2 rotated 90° with respect to the central part 7.1, and the lower end part 7.3 aligned with the central part 7.1, such that the upper end part 7.2 is oriented towards the upper area of the body 4, the central part 7.1 is oriented towards one of the side areas, and the lower end part is oriented towards the wheels 5. Therefore, with this arrangement of the module 7, by moving the mobile sub-units 2 the side and upper areas and wheels of the heavy-duty vehicle are covered, whereas the modules 9 act synchronously on the lower area. Additionally, by rotating the lower end part 7.3 90° with respect to the central part 7.1, the lower end part 7.3 can be arranged oriented towards the lower area of the heavy-duty vehicle.

In the same arrangement depicted in Figure 8, by means rotating the support arm 22 90°, the upper end part 7.2 can be arranged oriented towards the front or rear area of the body 4, whereas the central part 7.1 and the lower end part 7.3 are oriented towards the side area of the body 4, such that by extending the tower 12 in the vertical direction, the parts 7.1 ,7.2, 7.3 of the module 7 can be moved for simultaneously washing the side areas and the front or rear area of the body 4.

The lower end part 7.3 can be rotated with respect to the central part 7.1 by means of the articulation 7.4 for moving the part 7.3 closer to the heavy-duty vehicle and arranging it in a position in which it projects with respect to the part 7.1, such that said part 7.3 is used for improving the collection of the cleaning agents that have been discharged on the heavy-duty vehicle.

By extending the support arm 22, the distance between the central part 7.1 and the side area of the body 4 of the heavy-duty vehicle can be adjusted, and therefore the distance of the modules 7 can be adjusted to the width of the heavy-duty vehicle to be washed.

The upper end part 7.2 has coupling means 10 arranged at its end opposite the end in which the articulation 7.4 for the attachment with the central part 7.1 is located. The coupling means 10 are used for establishing a removable coupling with the upper end part 7.2 of the other mobile sub-unit 2, (which is not depicted in Figure 7 for the sake of clarity).

Figures 9 and 10 show a first example of one of the modules 6, 7, 8, or 9 of the washing unit. As can be observed in Figure 10, the opening of the casing 30 of the module 6, 7, 8, 9 has along its perimeter contour an air blowing and/or suction device 24. The device 24 is configured for establishing a pneumatic seal between the washing module 6, 7, 8, or 9 and the heavy-duty vehicle by means of the injection or suction of an air flow. The seal between the modules and the heavy-duty vehicle is thereby assured, limiting the cleaning agents from being able to fall onto the ground, and therefore achieving extraction means which can recover the cleaning agents that have been used in washing the heavy-duty vehicle.

Therefore, the device 24 can operate as an air blowing device, an air suction device, or an air blowing and suction device. The air blowing device 24 establishes the pneumatic seal by means of the injection of the air flow, whereas the air suction device 24 establishes the pneumatic seal by means of the suction of the air flow, and the air blowing and suction device 24 establishes the pneumatic seal by means of the alternating injection and suction of the air flow.

The device 24 performing the suction function can be used as the extraction means for extracting the cleaning agents that have been used in washing the heavy-duty vehicle. When the device 24 is not used performing the suction function, there is arranged inside the casing 30 of the module a extractor 28 for extracting the cleaning agents; nonetheless, for better assuring the extraction of such agents, the extractor 28 and the device 24 performing the suction function can be used simultaneously.

The device 24 for establishing the pneumatic seal is particularly useful in the vertical washing modules 7 and transverse washing modules 6 acting on the front, upper, rear, and side areas of the body 4 of the heavy-duty vehicle, which are smooth surface areas against which the pneumatic seal can be efficiently applied.

The cleaning agent discharge means 26, 27 comprise a steam device 26 and/or a spraying device 27. Both are arranged inside the casing 30 and act through the opening of the casing 30. The steam device 26 discharges steam or steam mixed with a cleaning product. The spraying device 27 discharges water or water mixed with a cleaning product, such as soap or other similar products. The spraying device 27 comprises sprayers distributed inside the casing 30 which can be fixed sprayers, circular sprayers, oscillating sprayers, or a combination thereof.

Additionally, a scrubbing device 25 for increasing cleaning efficiency is arranged inside the casing 30 of the washing module 6, 7, 8, 9. The device 25 can be rollers or brushes, which can be fixed or be operated by vibration or rotational movement. As shown in Figure 10, the device 25 consists of two rectangular-shaped brushes extending parallel to the largest sides of the perimeter contour of the opening 30.

The opening of the casing 30 configures and demarcates the work area of the module, determining the efficacy and efficiency of the washing tasks depending on the optimal adaptability and concentrated action of the cleaning agent discharge means integrated in the casing 30.

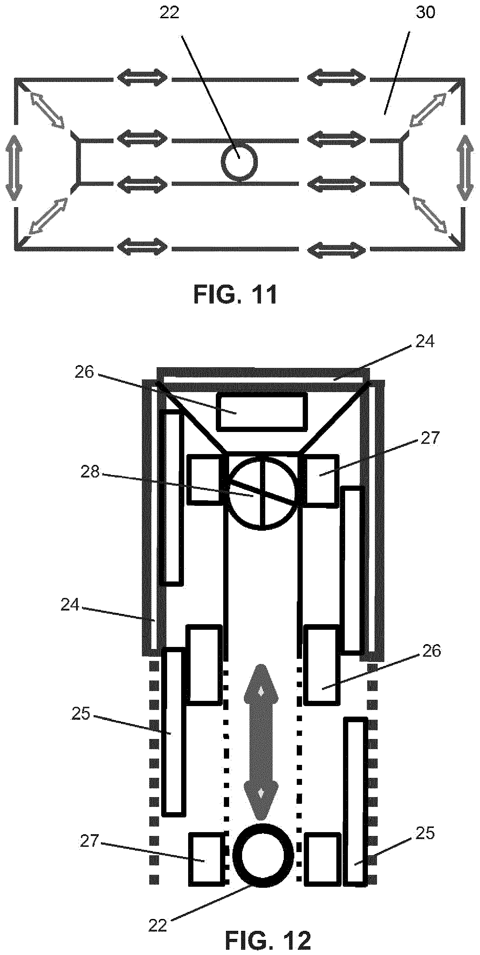

Figures 11 and 12 show a second example of one of the modules 6, 7, 8, or 9 of the washing unit, which is identical to the first example of Figures 9 and 10, except that the casing 30 of the washing modules 6, 7, 8, 9 has at least two extendable parts that can be extended with respect to one another for increasing or decreasing the size of the opening of the washing module 6, 7, 8, 9. The module can thereby be adapted to the dimensions of the heavy-duty vehicle. The extension of the module is represented by means of double arrows. The entire above description for the first example of Figures 9 and 10 is applicable to this second example of Figures 11 and 12.

The washing modules of Figures 9 to 12 can be applicable to any one of the washing units depicted in the examples of Figures 1 to 8.

The casing 30 is manufactured in a physically, chemically, and thermally resistant material.

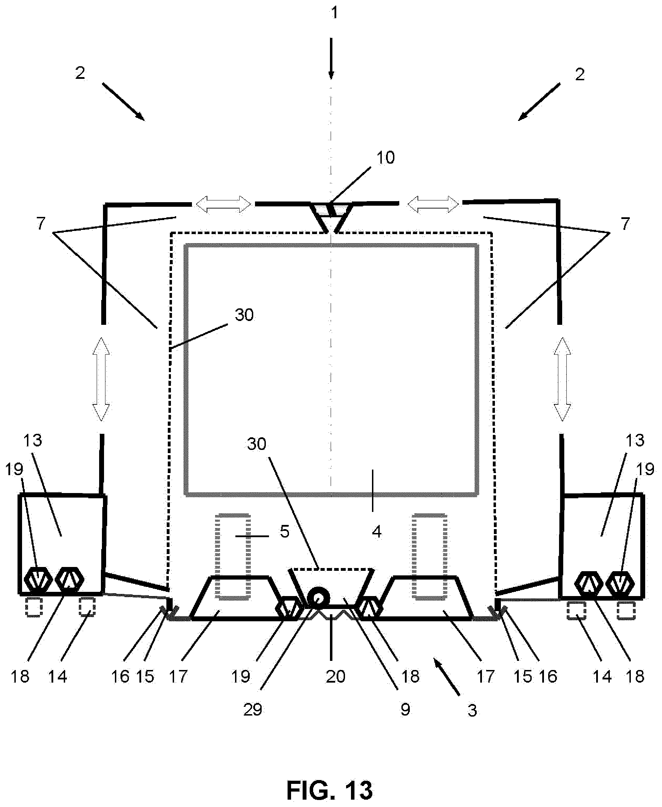

Figure 13 shows a schematic front view of a fifth embodiment of the washing unit 1 wherein the vertical washing modules 7 are attached directly to the main bodies 13 without using the support arms 22. The washing unit 1 comprises two mobile sub-units 2 which are coupled to one another forming a gantry-shaped tandem for being moved synchronously along the heavy-duty vehicle. Each mobile sub-unit 2 comprises a main body 13 which is attached to a washing module 7, the washing module 7 comprising a casing 30 with an opening oriented towards the heavy-duty vehicle, and being arranged inside the casing 30 the cleaning agent discharge means 26, 27 for discharging cleaning agents on the heavy-duty vehicle through the opening and extraction means 24, 28 for extracting the cleaning agents discharged on the heavy-duty vehicle. The entire above description for the other examples of the washing unit 1 is applicable to this fifth embodiment insofar as they are related.

## Claims

1. Washing module for an automated washing unit of a heavy-duty vehicle, comprising a casing (30) with an opening oriented towards the heavy-duty vehicle, wherein inside the casing (30) there are arranged cleaning agent discharge means (26, 27) for discharging cleaning agents on the heavy-duty vehicle through the opening, the washing module being **characterised in that** inside the casing (30) there are also arranged extraction means (24, 28) for extracting the cleaning agents discharged on the heavy-duty vehicle.

2. Module according to claim 1, wherein the casing (30) of the washing module has along its perimeter contour an air blowing device (24) for establishing a pneumatic seal between the washing module and the heavy-duty vehicle.

3. Module according to claim 1, wherein the extraction means (24) are an air suction device (24) which is arranged along the perimeter contour of the opening of the casing (30) for extracting the cleaning agents and for establishing a pneumatic seal between the washing module and the heavy-duty vehicle.

4. Module according to claim 1, wherein the opening of the casing (30) of the washing module has along its perimeter contour an air blowing and suction device (24) for establishing a pneumatic seal between the washing module and the heavy-duty vehicle by means of the alternating injection and suction of an air flow.

5. Module according to any of the preceding claims, wherein the cleaning agent discharge means (26, 27) comprise a steam device (26) and/or a spraying device (27).

6. Module according to any of the preceding claims, wherein a scrubbing device (25) is arranged inside the casing (30) of the washing module.

7. Module according to any of the preceding claims, wherein the casing (30) of the washing modules has at least two extendable parts that can be extended with respect to one another for increasing or decreasing the size of the opening of the washing module.

8. Module according to any of the preceding claims, comprising a central part (7.1) and at least one end part (7.2, 7.3) which is articulated with respect to an end of the central part (7.1), and wherein each of the parts (7.1, 7.2, 7.3) of the module (7) comprises a respective casing (30), the cleaning agent discharge means (26, 27) and the extraction means (24, 28) being arranged inside the casing (30).

9. Module according to the preceding claim, wherein the washing module comprises a central part (7.1), an upper end part (7.2), and a lower end part (7.3), wherein the central part (7.1) is articulated by its ends with the end parts (7.2, 7.3) by means of a respective articulation (7.4).

10. Module according to the preceding claim, wherein the articulations (7.4) are configured for rotating the end parts (7.2, 7.3) with respect to the central part (7.1).

11. Module according to claim 9 or 10, wherein the articulations (7.4) are configured for rotating the end parts (7.2, 7.3) about their longitudinal axis.

## Patentansprüche

1. Waschmodul für eine automatische Wascheinheit eines Nutzfahrzeugs, umfassend ein Gehäuse (30) mit einer Öffnung, welche zum Nutzfahrzeug hin orientiert ist, wobei innerhalb des Gehäuses (30) Reinigungsmittelabgabemittel (26, 27) angeordnet sind, zum Abgeben von Reinigungsmitteln auf dem Nutzfahrzeug durch die Öffnung, wobei das Waschmodul **dadurch gekennzeichnet ist, dass** innerhalb des Gehäuses (30) auch Entnahmemittel (24, 28) angeordnet sind, zum Entnehmen der auf dem Nutzfahrzeug abgegebenen Reinigungsmittel.

2. Modul nach Anspruch 1, wobei das Gehäuse (30) des Waschmoduls entlang dessen Umfangskontur eine Luftblasvorrichtung (24) aufweist, zum Herstellen einer pneumatischen Dichtung zwischen dem Waschmodul und dem Nutzfahrzeug.

3. Modul nach Anspruch 1, wobei das Entnahmemittel (24) eine Luftabsaugvorrichtung (24) ist, welche entlang der Umfangskontur der Öffnung des Gehäuses (30) angeordnet ist, zum Entnehmen der Reinigungsmittel und zur Herstellung einer pneumatischen Dichtung zwischen dem Waschmodul und dem Nutzfahrzeug.

4. Modul nach Anspruch 1, wobei die Öffnung des Gehäuses (30) des Waschmoduls entlang deren Umfangskontur eine Luftblas- und -absaugvorrichtung (24) aufweist, zum Herstellen einer pneumatischen Dichtung zwischen dem Waschmodul und dem Nutzfahrzeug mittels des abwechselnden Einspritzens und Absaugens eines Luftstromes.

5. Modul nach einem der vorhergehenden Ansprüche, wobei die Reinigungsmittelabgabemittel (26, 27) eine Dampfvorrichtung (26) und/oder eine Sprühvorrichtung (27) umfassen.

6. Modul nach einem der vorhergehenden Ansprüche, wobei eine Schrubbvorrichtung (25) innerhalb des Gehäuses (30) des Waschmoduls angeordnet ist.

7. Modul nach einem der vorhergehenden Ansprüche, wobei das Gehäuse (30) der Waschmodule mindestens zwei streckbare Teile aufweist, welche in Bezug aufeinander erstreckt werden können, um die Größe der Öffnung des Waschmoduls zu erhöhen oder zu verringern.

8. Modul nach einem der vorhergehenden Ansprüche, umfassend einen Mittelteil (7.1) und mindestens einen Endteil (7.2, 7.3), welcher in Bezug auf eine Ende des Mittelteils (7.1) angelenkt ist, und wobei jeder der Teile (7.1, 7.2, 7.3) des Moduls (7) ein jeweiliges Gehäuse (30) umfasst, wobei die Reinigungsmittelabgabemittel (26, 27) und die Entnahmemittel (24, 28) innerhalb des Gehäuses (30) angeordnet sind.

9. Modul nach dem vorhergehenden Anspruch, wobei das Waschmodul einen Mittelteil (7.1), einen oberen Endteil (7.2) und einen unteren Endteil (7.3) umfasst, wobei der Mittelteil (7.1) mittels dessen Enden mit den Endteilen (7.2, 7.3) mittels eines jeweiligen Gelenks (7.4) angelenkt ist.

10. Modul nach dem vorhergehenden Anspruch, wobei die Gelenke (7.4) dazu ausgebildet sind, die Endteile (7.2, 7.3) in Bezug auf den Mittelteil (7.1) zu rotieren.

11. Modul nach Anspruch 9 oder 10, wobei die Gelenke (7.4) dazu ausgebildet sind, die Endteile (7.2, 7.3) um deren Längsachse herum zu rotieren.

## Revendications

1. Module de lavage pour une unité de lavage automatique d'un véhicule utilitaire, comprenant un boîtier (30) avec une ouverture orientée vers le véhicule utilitaire, dans lequel à l'intérieur du boîtier (30) sont disposés des moyens de décharge d'agent de nettoyage (26, 27) pour décharger des agents de nettoyage sur le véhicule utilitaire à travers l'ouverture, le module de lavage étant **caractérisé en ce qu'**à l'intérieur du boîtier (30) sont disposés également des moyens d'extraction (24, 28) pour extraire les agents de nettoyage déchargés sur le véhicule utilitaire.

2. Module selon la revendication 1, dans lequel le boîtier (30) du module de lavage présente le long du contour de son périmètre un dispositif de soufflage d'air (24) pour établir une étanchéité pneumatique entre le module de lavage et le véhicule utilitaire.

3. Module selon la revendication 1, dans lequel les moyens d'extraction (24) sont un dispositif d'aspiration d'air (24) qui est disposé le long du contour du périmètre de l'ouverture du boîtier (30) pour extraire les agents de nettoyage et pour établir une étanchéité pneumatique entre le module de lavage et le véhicule utilitaire.

4. Module selon la revendication 1, dans lequel l'ouverture du boîtier (30) du module de lavage présente le long du contour de son périmètre un dispositif de soufflage et d'aspiration d'air (24) pour établir une étanchéité pneumatique entre le module de lavage et le véhicule utilitaire par le biais de l'injection et l'aspiration alternées d'un flux d'air.

5. Module selon l'une quelconque des revendications précédentes, dans lequel les moyens de décharge d'agent de nettoyage (26, 27) comprennent un dispositif à vapeur (26) et/ou un dispositif de pulvérisation (27).

6. Module selon l'une quelconque des revendications précédentes, dans lequel un dispositif de frottement (25) est disposé à l'intérieur du boîtier (30) du module de lavage.

7. Module selon l'une quelconque des revendications précédentes, dans lequel le boîtier (30) des modules de lavage présente au moins deux parties extensibles qui peuvent être étendues l'une par rapport à l'autre pour augmenter ou diminuer la taille de l'ouverture du module de lavage.

8. Module selon l'une quelconque des revendications précédentes, comprenant une partie centrale (7.1) et au moins une partie d'extrémité (7.2, 7.3) qui est articulée par rapport à une extrémité de la partie centrale (7.1), et dans lequel chacune des parties (7.1, 7.2, 7.3) du module (7) comprend un boîtier (30) respectif, les moyens de décharge d'agent de nettoyage (26, 27) et les moyens d'extraction (24, 28) étant disposés à l'intérieur du boîtier (30).

9. Module selon la revendication précédente, dans lequel le module de lavage comprend une partie centrale (7.1), une partie d'extrémité supérieure (7.2), et une partie d'extrémité inférieure (7.3), dans lequel la partie centrale (7.1) est articulée par ses extrémités avec les parties d'extrémité (7.2, 7.3) par le biais d'une articulation (7.4) respective.

10. Module selon la revendication précédente, dans lequel les articulations (7.4) sont configurées pour faire tourner les parties d'extrémité (7.2, 7.3) par rapport à la partie centrale (7.1).

11. Module selon la revendication 9 ou 10, dans lequel les articulations (7.4) sont configurées pour faire tourner les parties d'extrémité (7.2, 7.3) autour de leur axe longitudinal.
